# EUROPÄISCHE PATENTSCHRIFT

(11) **EP 3 039 494 B1**
(45) Veröffentlichungstag und Bekanntmachung des Hinweises auf die Patenterteilung: **03.05.2023**
(21) Anmeldenummer: 14801994.6
(22) Anmeldetag: 17.11.2014
(51) Int. Cl.: G05B 19/05, G05B 19/042, G05B 19/418

(54) **AUTOMATISIERUNGSSYSTEM**
AUTOMATION SYSTEM
SYSTÈME D'AUTOMATISATION

(30) Priorität: 19.11.2013 EP 13005422
(43) Veröffentlichungstag der Anmeldung: 06.07.2016
(73) Patentinhaber: Siemens Aktiengesellschaft, 80333 München (DE)
(72) Erfinder: VOLEVACH, Vitaliy, 90443 Nürnberg (DE)
(74) Vertreter: Siemens Patent Attorneys
(86) Internationale Anmeldenummer: PCT/EP2014/074787
(87) Internationale Veröffentlichungsnummer: WO 2015/075000

(56) Entgegenhaltungen:
- US-A- 5 796 936
- US-A1- 2008 208 361

## Beschreibung

Die vorliegende Erfindung beschreibt ein Automatisierungssystem mit einer ersten und einer zweiten Steuereinheit sowie einer ersten und zweiten Ein- und/oder Ausgabe-Einheit zur Steuerung eines Geräts oder einer Anlage.

Derartige Automatisierungssysteme sind aus dem Stand der Technik bekannt.

So offenbart beispielsweise die US-Veröffentlichungsschrift US 2008/0208361 A1 ein System bzw. ein Verfahren, welches eine Zuordnung von Aufgaben bzw. Software innerhalb eines industriellen Automatisierungssystems vereinfacht. Dabei umfasst das Automatisierungssystem beispielsweise mehrere Controller, während zusätzlich eine entsprechende Komponente zur Verteilung von Aufgaben bzw. Funktionalitäten auf diese Controller vorgesehen ist.

Das US-Patent US 5,796,936 offenbart ein verteiltes Steuerungssystem mit einer Mehrzahl von Controllern, die über ein Netzwerk gekoppelt sind. Dabei enthält jeder der Controller die Möglichkeit, eine eigene interne Rechenlast zu erfassen. Weiterhin besteht auch die Möglichkeit, Rechenlast von einem Controller auf einen anderen der Controller zu verlagern
Es ist ein Nachteil bestehender Automatisierungssysteme, dass beim Ausfall einer Steuerung entweder das Gesamte Steuerungssystem so lange ausfällt, bis die ausgefallene Steuerung ersetzt ist oder beispielsweise zu jedem Element des Automatisierungssystems eine redundantes vorgehalten werden muss, um beim Ausfall eines der Komponenten eine Funktionalität des Gesamtsystems gewährleisten zu können.

Daher ist es eine Aufgabe der vorliegenden Erfindung, ein Automatisierungssystem zur Verfügung zu stellen, welches flexibler, einfacher und/oder besser auf Änderungen innerhalb des Automatisierungssystems reagieren kann.

Diese Aufgabe wird gelöst durch ein Automatisierungssystem, eine übergeordnete Steuerung oder ein Verfahren gemäß den vorliegenden Patentansprüchen.

Durch die Zuordnung der einzelnen Steuerprogrammbausteine, aus welchen das Steuerprogramm zur Steuerung der gesamten Anlage zusammengesetzt ist, auf verschiedene Steuereinheiten des Automatisierungssystems ist es möglich, flexibel auf entsprechende Änderungen bei den Steuereinheiten oder auch bei den Ein- und/oder Ausgabe-Einheiten zu reagieren.

Dabei können die erste und die zweite Steuereinheit beispielsweise als ein Computer, ein Modul einer Speicherprogrammierbaren Steuerung oder einer Speicherprogrammierbaren Steuerung ("SPS" oder "PLC") selbst entsprechen. Weiterhin können die erste und zweite Ein- und/oder Ausgabe-Einheit beispielsweise als Eingabe- und/oder Ausgabe-Karte für einen Computer oder Ähnliches, ein Ein- und/oder Ausgabemodul für eine Speicher programmierbare Steuerung oder vergleichbare Module oder Geräte ausgebildet und eingerichtet sein.

Das Automatisierungssystem kann weiterhin auch mehr als zwei Steuereinheiten und/oder Ein- und/oder Ausgabe-Einheiten umfassen, wobei diese jeweils gemäß der in der vorliegenden Beschreibung dargestellten Einheiten ausgebildet und eingerichtet sein können.

Die von der Ein- und/oder Ausgabeeinheit ausgegebenen Signale können beispielsweise zur Steuerung eines oder mehrerer Aktoren des gesteuerten Geräts beziehungsweise der gesteuerten Anlage vorgesehen und dafür eingerichtet sein. Die empfangenen elektronischen Signale können beispielsweise von entsprechenden Sensoren oder auch Aktoren des gesteuerten beziehungsweise der gesteuerten Anlage für die Steuereinheit vorgesehen und eingerichtet sein.

Dabei können die elektronischen Signale beispielsweise analoge Spannungs- oder Stromsignale, analoge Signalfolgen oder auch digitale Signale oder Signalfolgen sein beziehungsweise aus derartigen Signalen bestehen.

Die übergeordnete Steuereinheit kann beispielsweise als ein Computer oder auch eine Steuereinheit oder auch eine Speicherprogrammierbare Steuerung oder Ähnliches ausgebildet und eingerichtet sein.

Die Zuordnung der Steuerprogrammbausteine zu den Steuereinheiten kann beispielsweise durch eine Übertragung der Steuerprogrammbausteine von der übergeordneten Steuereinheit an die jeweiligen Steuereinheiten erfolgen. Weiterhin kann die Zuordnung auch durch eine Information über die von den jeweiligen Steuereinheiten auszuführenden Steuerprogrammbausteine bestehen. Dabei kann beispielsweise vorgesehen sein, dass die jeweiligen Steuereinheiten bereits alle oder mehrere der Steuerprogrammbausteine gespeichert haben, und durch die übergeordnete Steuereinheit die Information erhalten, welche der Steuerprorammbausteine durch sie ausgeführt werden sollen.

Eine übergeordnete Steuereinheit kann beispielsweise als ein System ausgebildet sein, welches dynamisch Steuerprogramme an angeschlossene Steuereinheiten verteilt und/oder ein oder mehrere Steuerprogramm bzw. -bausteine an entsprechende Steuereinheiten anpasst, z.B. in entsprechende Bausteine zerlegt, und/oder auch eine korrekte Adressierung entsprechender Ein- und/oder Ausgabekanäle übernimmt.

Entsprechende Änderungen des Automatisierungssystems können beispielsweise ein Wegfall und/oder ein Hinzukommen von Steuereinheiten und/oder Ein- und /oder Ausgabe-Einheiten oder Baugruppen sein. Weiterhin können Änderungen des Automatisierungssystems auch in einer Änderung von Kommunikationsverbindungen, Kommunikationsmodulen und ähnlichen Modulen oder Elementen des Automatisierungssystems bestehen beziehungsweise solche Änderungen umfassen.

Eine Verschlechterung einer Steuerung durch eine Änderung des Automatisierungssystems kann beispielsweise eine langsamere Ausführung, eine ungenauere Ausführung und/oder eine unsicherere oder fehlerhaftere Ausführung des Steuerprogramms umfassen beziehungsweise aus einer solchen bestehen. Eine Steuerung des zu steuernden Geräts beziehungsweise der zu steuernden Anlage kann dann beispielsweise unmöglich werden, wenn eine der beteiligten Steuereinheiten beispielsweise ausfällt. In solch einem Fall kann dann die übergeordnete Steuereinheit beispielsweise die Steuerprogrammbausteine auf die noch zu funktionierenden Steuereinheiten neu verteilen.

Die Überprüfung der Zuordnung der Steuerprogrammbausteine kann beispielsweise daraufhin erfolgen, ob der Ablauf des gesamten Steuerprogramms nach einer Änderung des Automatisierungssystems langsamer, unsicherer, fehlerhafter, unmöglich oder ähnlich negativ-funktionaler wird.

Die vorliegende Erfindung kann beispielsweise helfen, beim Ausfall einer Speicherprogrammierbaren Steuerung im laufenden Betrieb durch einen Hardwaredefekt oder eines anderen Problems beispielsweise einfacher, preiswerter und/oder schneller als aus dem Stand der Technik bekannt, eine Funktionalität erhalten oder wieder herstellen.

Vorteilhafter Weise können dabei die Stromversorgungen zu den einzelnen Ein- oder Ausgabe-Baugruppen weiterhin erhalten sein.

Dabei kann bisher beispielsweise eine Anlage gemäß dem Stand der Technik erst dann wieder in Betrieb genommen werden, nachdem eine ausgefallene Komponente ausgetauscht und komplett wieder eingerichtet worden ist. Alternativ können zu einzelnen Zentraleinheiten beispielsweise für Speicherprogrammierbare Steuerungen gemäß dem Stand der Technik jeweils redundante beziehungsweise hoch verfügbare Ersatz-Zentraleinheiten vorgesehen sein, welche synchron zur ersten laufen und im Störfall deren Aufgabe übernehmen. Dies ist allerdings sehr teuer und aufwändig, da quasi die gesamte Hardware gedoppelt werden muss.

Die vorliegende Erfindung löst diese Problematik durch Einsatz der übergeordneten Steuereinheit gemäß der vorliegenden Beschreibung. In einer vorteilhaften Ausgestaltung kann bei Verwendung von Speicherprogrammierbaren Steuerungen jede der Speicherprogrammierbaren Steuerungen innerhalb des Automatisierungssystems jede der Eingabe- und/oder Ausgabe-Einheit der Anlage ansteuern.

Für den Fall, dass die Eingabe-Ausgabe-Einheiten an einer oder mehrerer der Speicherprogrammierbaren Steuerungen angehängt sind, können diese für andere Speicherprogrammierbare Steuerungen innerhalb eines Netzwerks (z.B. ProfiNet oder ProfiBus) sichtbar und/oder ansprechbar sind beziehungsweise sein. Dies kann beispielsweise durch eine Erweiterung der Funktionalität der Speicherprogrammierbaren Steuerungen (beispielsweise durch Verwendung spezieller Kommunikations-Controller) oder auch durch einen direkten Anschluss von Eingabe-Ausgabe-Baugruppen an ein Netzwerk (z.B. mit jeweils einem eigenständigen Controller) erreicht werden.

Vorteilhafter Weise bekommen alle physischen Ein- und/oder Ausgänge eine eindeutige Adresse zugewiesen. Diese Adresszuweisung kann beispielsweise durch ein Engineering-System erfolgen oder auch durch die übergeordnete Steuereinheit.

Dabei ist das Automatisierungssystem vorteilhafter Weise derart ausgestaltet und eingerichtet, dass verschiedene Ein- und/oder Ausgänge einer Eingabe-Ausgabe-Einheit von verschiedenen der Steuereinheiten beziehungsweise Speicher programmierbaren Steuerungen geschrieben beziehungsweise gelesen werden können.

Vorteilhafterweise können die jeweiligen Eingabe-Ausgabe-Einheiten jeweils Steuereinheiten des Automatiseriungssystems zugeordnet sein, beziehungsweise an diese angehängt sein. In diesem Fall kann dann die Verbindung der Eingabe-Ausgabeeinheiten mit den jeweiligen Steuerungseinheiten über einen sogenannten Rückwandbus erfolgen, wie er regelmäßig z.B. bei sogenannten Speicherprogrammierbaren Steuerungen verwendet wird.

In diesem Fall kann das Automatisierungssystem, und insbesondere der Rückwandbus, dann derart ausgestaltet sein, dass jeder der Eingabe-Ausgabe-Einheiten von jeder der Steuereinheiten des Automatisierungssystems aus adressierbar, ansteuerbar und/oder ansprechbar ist. Es kann dazu z.B. vorgesehen sein, dass jede der Eingabe-Ausgabe-Einheiten und gegebenenfalls auch jede der Steuereinheiten eine im Automatisierungssystem eindeutige Adresse erhält, über welche sie erreichbar bzw. ansprechbar ist.

Der Rückwandbus kann dazu z.B. derart eingerichtet und ausgebildet sein, dass über ihn eine TCP/IP-Kommunikation bzw. eine Kommunikation gemäß dem Internet Protokoll, insbesondere gemäß IPv4 und/oder IPv6 erfolgen kann oder erfolgt - gegebenenfalls zusätzlich zu anderen Kommunikationsmöglichkeiten. Auf diese Weise können für die entsprechende Adressvergabe z.B. die Mechanismen des Internet Protokolls, insbesondere von IPv4 und/oder IPv6, verwendet werden.

Die Kommunikation der Steuereinheiten untereinander und auch mit der übergeordneten Steuereinheit kann gleichfalls über ein mit TCP/IP oder dem Internet Protokoll kompatibles Kommunikationsprotokoll, insbesondere einen entsprechend kompatiblen Feldbus erfolgen. Eine derartige Kommunikation kann z.B. gemäß dem PROFINET-Standard oder einem vergleichbaren Standard bzw. Protokoll ausgebildet und eingerichtet sein.

Vorteilhafter Weise können die Steuereinheiten und Eingabe-Ausgabe-Module als Module oder Modul-Kombinationen für Modulare Speicherprogrammierbare Steuerungen (SPS) ausgebildet und eingerichtet sein.

In einer weiteren vorteilhaften Ausgestaltung können die vorstehenden Ausgestaltungsmöglichkeiten derart kombiniert werden, dass das das Automatisierungssystem modulare Speicherprogrammierbare Steuerungen umfasst, welche über ein IPkompatible Netz (z.B. ProfiNet) untereinander und mit der übergeordneten Steuereinheit verbunden sind, und welche jeweils einen IP-kompatiblen Rückwandbus umfassen. Auf diese Weise kann gegebenenfalls die Adressierung der einzelnen Module des Automatisierungssystems durch die Mechanismen des Internet Protokolls (z.B. IPv4 und/oder IPv6) erfolgen oder vereinfacht werden.

Die übergeordnete Steuereinheit "kennt" z.B. alle Programme, Programmbausteine und/oder Steuerprogrammbausteine einer Anlage und kann sie auf die vorhandenen Steuereinheiten beziehungsweise Speicher programmierbaren Steuerungen dynamisch verteilen, z.B. unter anderem auch die Speichereinheiten beziehungsweise Speicher programmierbaren Steuerungen programmieren. Dabei wird die Gesamtheit der Programme, Programmbausteine oder Steuerprogrammbausteine im Rahmen der vorliegenden Beschreibung als "das Steuerprogramm" zur Steuerung des Geräts beziehungsweise der Anlage bezeichnet.

Die übergeordnete Steuerung kann auch die Anpassung der Adressierung in einem Programm beziehungsweise entsprechenden Programmbaustein oder Steuerprogrammbaustein übernehmen, so dass beispielsweise unabhängig von der ausführenden Steuereinheit beziehungsweise Speicherprogrammieren Steuerung stets die richtige Eingabe-Ausgabe-Einheit oder Baugruppe angesprochen wird. Bei einer Programmänderung oder einem Ausfall einer Steuereinheit beziehungsweise einer Speicherprogrammierbaren Steuerung beziehungsweise eines entsprechenden Steuermoduls kann die übergeordnete Steuereinheit dann eine dynamische Umverteilung der entsprechenden Programme, Programmbausteine oder Steuerprogrammbausteine vornehmen.

Dabei kann die übergeordnete Steuerung beispielsweise eine Optimierungsroutine oder ein Optimierungsprogramm oder ein Optimierungsmodul umfassen, mit welcher eine Aufteilung der entsprechenden Programmbausteine ermittelt wird, welche beispielsweise eine gleichmäßige Auslastung der Steuerungen anstrebt. Weiterhin kann eine solche Optimierungsroutine beziehungsweise ein entsprechendes Modul derart ausgebildet sein, dass dabei vorgegebene Zykluszeiten eingehalten werden.

Mit der vorliegenden Erfindung wird beispielsweise also nicht mehr wie im Stand der Technik eine einzelne Steuereinheit oder Speicher programmierbare Steuerung beziehungsweise CPU-Modul eines Automatisierungssystems programmiert, sondern im Prinzip ein Verbund von Steuereinheiten. Eine Zuteilung von Programmen oder Programmbausteinen zu den einzelnen Steuereinheiten oder Speicherprogrammierbaren Steuerungen beziehungsweise Zentral-Modulen wird dann durch die übergeordnete Steuereinheit beispielsweise durch einen in dieser vorgesehenen entsprechenden optimierenden Algorithmus übernommen.

Dabei ergeben sich beispielsweise unter Anderem ein oder mehrere der folgenden Vorteile:
- Eine Aufrüstbarkeit bestehender Automatisierungslösungen bei Beibehaltung der ursprünglichen räumlichen Konfiguration der Steuerungen;
- Gleichmäßigere Programmlastverteilung auf alle für eine Anlage vernetzten Steuereinheiten beziehungsweise Speicher programmierbaren Steuerungen;
- Dynamische Möglichkeit einer Leistungserweiterung einer Anlage durch Hinzunahme weiterer Steuereinheiten oder Steuermodule ohne Notwendigkeit eines Upgradens der bestehenden Steuerungen;
- N1-Sicherheit der CPU eines Verbundsystems aus Speicher programmierbaren Steuerungen. Das heißt, dass beim Ausfall einer Steuereinheit beziehungsweise eines Zentral-Moduls einer Speicher programmierbaren Steuerung die Anlage weiter im Betriebszustand ist, ohne für jede Steuereinheit beziehungsweise jedes Zentralmodul einzeln eine Reserve bereit halten zu müssen.

Weitere vorteilhafte Ausgestaltungen ergeben sich aus den Unteransprüchen.

Nachfolgend wird die Erfindung beispielhaft mit Bezug auf die beigefügten Zeichnungen näher erläutert.

Es zeigen:
Fig. 1: Beispiel für eine Automatisierungssystem zur Steuerung einer Anlage;
Fig. 2: Das Automatisierungssystem gemäß Fig. 1 nach dem Ausfall einer Steuerung;
Fig. 3: Automatisierungssystem gemäß Fig. 1 mit alternativer Ankopplung der gesteuerten Anlage.

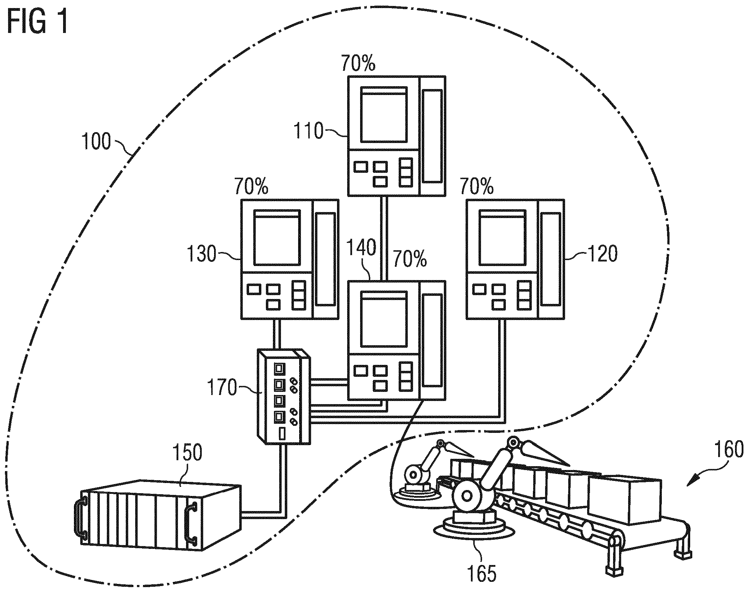

Fig. 1 zeigt ein Automatisierungssystem 100, welches aus vier Speicherprogrammierbaren Steuerungen 110, 120, 130, 140 besteht. Dabei umfasst jede der Speicherprogrammierbaren Steuerungen (PLC) 110, 120, 130, 140 eine Zentraleinheit und ein Ein-Ausgabe-Modul. Die Speicherprogrammierbaren Steuerungen 110, 120, 130, 140 sind jeweils über einen Netzknoten 170 untereinander und mit einem so genannten "Dispatcher" 150 verbunden. Der Dispatcher ist dabei ein Beispiel für eine übergeordnete Steuereinheit gemäß der vorliegenden Beschreibung.

Die Ein-Ausgabe-Baugruppe der in Fig. 1 unteren PLC 140 ist mit einem Roboter 165 einer gesteuerten Anlage 160 verbunden. Dabei erfolgt die Steuerung des Roboters 165 über entsprechende Ein- und Ausgabe-Signalisierung der Ein-Ausgabe-Baugruppe der unteren PLC 140.

Zur Steuerung der Anlage 160 sind verschiedene Programmbausteine vorgesehen, die vom Dispatcher 150 auf die PLCs 110, 120, 130, 140 so übertragen und zugeordnet werden, dass jede der PLCs 110, 120, 130, 140 zu ungefähr 70% ihrer Leistungsfähigkeit ausgelastet sind.

Dabei sind die PLCs 110, 120, 130, 140 derart ausgestaltet, dass über die in Fig. 1 dargestellten Kommunikationsverbindungen jede der PLCs auch auf jeder der Ein-Ausgabe-Baugruppen der anderen PLCs zugreifen kann. Dies kann beispielsweise dadurch erfolgen, dass jede der PLCs 110, 120, 130, 140 ein Kommunikationsmodul umfasst, welches auch einen unmittelbaren Zugriff auf die Eingabe-Ausgabe-Baugruppe dieser PLC durch die entsprechende Kommunikationsverbindung erlaubt. Alternativ können beispielsweise auch die Ein-Ausgabe-Baugruppen mit einem entsprechenden Kommunikationsmodul oder Baustein ausgerüstet sein.

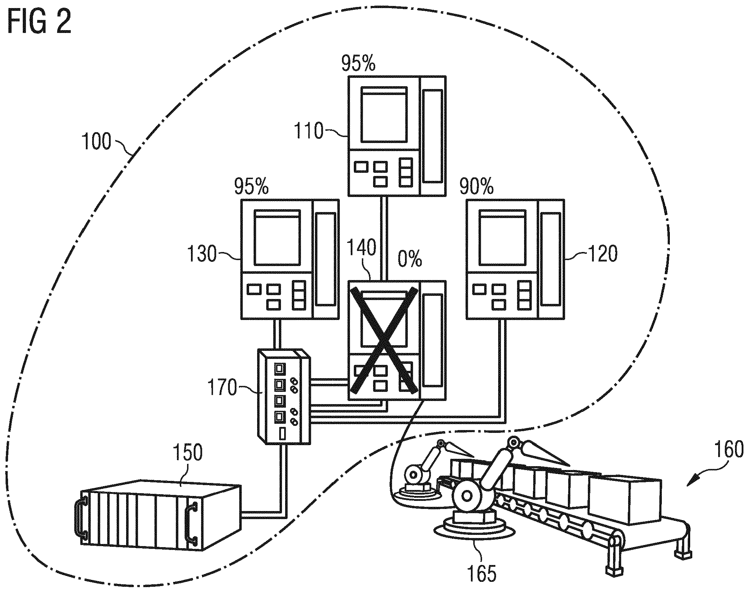

Fig. 2 zeigt das Automatisierungssystem 100 mit der daran angeschlossenen Anlage 160 nach dem Ausfall der unteren PLC 140. Nach einer Feststellung dieses Ausfalls durch den Dispatcher 150 beziehungsweise einer entsprechenden Information an den Dispatcher 150 übernimmt der Dispatcher eine Neuverteilung aller für die Steuerung der Anlage 160 notwendigen Prorammbausteine auf die verbleibenden funktionierenden PLCs 110, 120, 130. Dabei ermittelt der Dispatcher 150 eine Programmverteilung derart, dass keine der angeschlossenen, noch funktionierenden PLCs 110, 120, 130 überlastet wird. So ergibt sich beispielweise im vorliegenden Beispiel eine Neuverteilung der notwendigen Programmbausteine durch den Dispatcher 150 derart, dass zwei der PLCs 110, 130, zu 95% ausgelastet sind und die dritte, 120, zu 90%.

Der Roboter 165 wird weiterhin über die Eingabe-Ausgabe-Baugruppe der defekten PLC 140 angesteuert, wobei die Signale an diese Eingabe-Ausgabe-Baugruppe von denjenigen der verbleibenden PLCs 110, 120, 130 an diese Eingabe-Ausgabe-Baugruppe übermittelt werden, welche nun entsprechende Programmbausteine zur Steuerung des Roboters 165 umfassen.

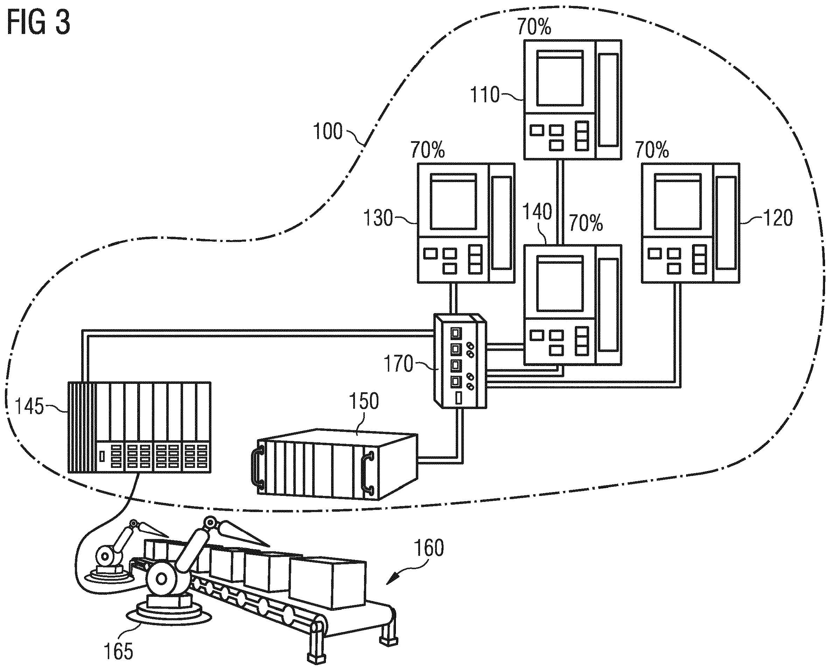

Figur 3 zeigt eine zu der Darstellung in Figur 1 alternative Ausgestaltung des Automatisierungssystems 100 zur Steuerung der Anlage 160. Dabei ist neben den bereits in Figur 1 dargestellten PLCs 110, 120, 130, 140 noch eine mehrere Ein-Ausgabe-Baugruppen umfassende Dezentrale-Peripherieeinheit 145 vorgesehen, die mit dem Netzknoten 170 und darüber auch mit den PLCs 110, 120, 130, 140 und dem Dispatcher 150 verbunden ist. Dabei sind die Baugruppen der Dezentralen-Peripherieeinheit 145 von jeder der PLCs 110, 120, 130, 140 aus ansteuerbar bzw. auslesbar.

Im Falle des in Figur 3 dargestellten Systems erfolgt die Ansteuerung der Anlage 160 jetzt über die Dezentrale-Peripherieeinheit 145. Dabei wird insbesondere der Roboter 165 über eine Baugruppe der Dezentralen-Peripherieeinheit 145 gesteuert.

Wie bereits im Falle des in Figur 1 dargestellten Automatisierungssystems 100 sind auch hier zur Steuerung der Anlage 160 verschiedene Programmbausteine vorgesehen, die vom Dispatcher 150 auf die PLCs 110, 120, 130, 140 so übertragen und zugeordnet werden, dass jede der PLCs 110, 120, 130, 140 zu ungefähr 70% ihrer Leistungsfähigkeit ausgelastet ist.

Bei beispielsweise einem Ausfall der unteren PLC 140 übernimmt der Dispatcher 150 analog zum bereits in Zusammenhang mit Figur 2 erläuterten Fall eine Neuverteilung aller für die Steuerung der Anlage 160 notwendigen Prorammbausteine auf die verbleibenden funktionierenden PLCs 110, 120, 130. Dabei ermittelt der Dispatcher 150 eine Programmverteilung derart, dass keine der angeschlossenen, noch funktionierenden PLCs 110, 120, 130, überlastet wird. So kann sich im vorliegenden Beispiel wiederum eine Neuverteilung der notwendigen Programmbausteine durch den Dispatcher 150 derart ergeben, dass zwei der PLCs 110, 130, zu 95% ausgelastet sind und die dritte, 120, zu 90% - wiederum entsprechend dem in Figur 2 dargestellten Ausführungsbeispiel.

Der Roboter 165 wird dabei weiterhin unverändert über die Baugruppe der Dezentralen-Peripherieeinheit 145 angesteuert.

## Patentansprüche

1. Automatisierungssystem (100), umfassend:
- mindestens eine erste und eine zweite Steuereinheit (110, 120, 130, 140) zur Steuerung eines Geräts (165) oder einer Anlage (160, 165) sowie eine erste und eine zweite Ein- und/oder Ausgabe-Einheit (110, 120, 130, 140, 145) zum Empfang eines elektronischen Signals von dem Gerät (165) bzw. der Anlage (160, 165) und/oder zur Ausgabe eines elektronischen Signals an das Gerät (165) bzw. die Anlage (160, 165), und
- ein Steuerprogramm, umfassenden mehrere Steuerprogrammbausteine, zur Steuerung des Geräts (165) oder der Anlage (160, 165),
- wobei das Automatisierungssystem (100) derart ausgebildet und eingerichtet ist, dass jede der mindestens zwei Steuereinheiten (110, 120, 130, 140) sowohl mit der ersten als auch mit der zweiten Ein- und/oder Ausgabeeinheit (110, 120, 130, 140, 145) elektronische Daten zur Steuerung des Geräts (165) oder der Anlage (160, 165) austauschen kann,
- wobei das Automatisierungssystem (100) weiterhin eine übergeordnete Steuereinheit (110, 120, 130, 140, 150) umfasst, welche die Steuerprogrammbausteine den mindestens zwei Steuereinheiten (110, 120, 130, 140) derart zuordnet, dass beim Ablauf der Steuerprogrammbausteine innerhalb der jeweiligen Steuereinheiten (110, 120, 130, 140) das Gerät (165) oder die Anlage (160, 165) entsprechend dem Steuerprogramm gesteuert wird, und
- wobei die übergeordnete Steuereinheit (110, 120, 130, 140, 150) zur dynamischen Umverteilung der Steuerprogrammbausteine nach einer Programmänderung des Steuerprogramms oder einem Ausfall einer der Steuereinheiten (110, 120, 130, 140) des Automatisierungssystems (100) ausgebildet und eingerichtet ist.

2. Automatisierungssystem gemäß Anspruch 1
**dadurch gekennzeichnet,**
**dass** den Ein- und/oder Ausgabe-Einheiten (110, 120, 130, 140, 145) jeweils ein Kommunikationsmodul zur Kommunikation mit der ersten und/oder zweiten Steuereinheit (110, 120, 130, 140) zugeordnet ist.

3. Automatisierungssystem gemäß Anspruch 1 oder 2
**dadurch gekennzeichnet,**
**dass** die übergeordnete Steuereinheit (110, 120, 130, 140, 150) derart ausgebildet und eingerichtet ist, dass die Zuordnung der Steuerprogrammbausteine zu den mindestens zwei Steuereinheiten (110, 120, 130, 140) bei einer Änderung des Automatisierungssystems (100) überprüft wird.

4. Automatisierungssystem gemäß Anspruch 3
**dadurch gekennzeichnet,**
**dass** die übergeordnete Steuereinheit (110, 120, 130, 140, 150) derart ausgebildet und eingerichtet ist, dass die Zuordnung der Steuerprogrammbausteine zu den mindestens zwei Steuereinheiten (110, 120, 130, 140) bei einer Änderung des Automatisierungssystems (100) nach der Überprüfung geändert wird,
insbesondere dann geändert wird, wenn die Überprüfung ergibt, dass die Steuerung des Geräts (165) oder der Anlage (160, 165) durch die Änderung des Automatisierungssystem (100) bei der bestehenden Zuordnung der Steuerprogrammbausteine verschlechtert oder unmöglich wird.

5. Automatisierungssystem gemäß einem der vorstehenden Ansprüche,
**dadurch gekennzeichnet,**
**dass** die erste und zweite Ein- und/oder Ausgabe-Einheit (110, 120, 130, 140, 145) jeweils an die erste und/oder zweite Steuereinheit (110, 120, 130, 140) angehängt sind und die erste und zweite Ein- und/oder Ausgabe-Einheit (110, 120, 130, 140, 145) für jede der ersten und zweiten Steuereinheit (110, 120, 130, 140) sichtbar und/oder durch diese ansprechbar oder ansteuerbar sind beziehungsweise sein können.

6. Automatisierungssystem gemäß Anspruch 5,
**dadurch gekennzeichnet,**
**dass** die erste und zweite Ein- und/oder Ausgabe-Einheit (110, 120, 130, 140, 145) jeweils mit der Steuereinheit (110, 120, 130, 140), an welche sie angehängt sind, über einen Rückwandbus verbunden sind, wobei der Rückwandbus derart ausgestaltet und eingerichtet ist, dass jede der Ein- und/oder Ausgabe-Einheiten (110, 120, 130, 140, 145) von jeder der Steuereinheiten (110, 120, 130, 140) aus adressierbar und/oder ansprechbar ist.

7. Automatisierungssystem gemäß Anspruch 6,
**dadurch gekennzeichnet,**
**dass** eine Kommunikation über die jeweiligen Rückwandbusse als TCP/IP-Kommunikation und/oder gemäß dem Internet-Protokoll, insbesondere gemäß IPv4 oder IPv6, ausgebildet und eingerichtet ist.

8. Automatisierungssystem gemäß einem der vorstehenden Ansprüche,
**dadurch gekennzeichnet,**
**dass** die erste und zweite Ein- und/oder Ausgabe-Einheit (110, 120, 130, 140, 145) und die erste und/oder zweite Steuereinheit (110, 120, 130, 140) jeweils als Module oder Modulkombinationen einer modularen Speicherprogrammierbaren Steuerung ausgebildet und eingerichtet sind.

9. Verfahren zum Betrieb eines Automatisierungssystems (100) gemäß einem der vorstehenden Ansprüche,
umfassend die Schritte:
- Zuordnung der Steuerprogrammbausteine zu den mindestens zwei Steuereinheiten (110, 120, 130, 140) (110, 120, 130, 140) durch die übergeordnete Steuereinheit (110, 120, 130, 140, 150);
- Ablauf der Steuerprogrammbausteine innerhalb der ersten und/oder zweiten Steuereinheit (110, 120, 130, 140) derart, dass das durch das Automatisierungssystem (100) zu steuernde Gerät (165) oder die zu steuernde Anlage (160, 165) gemäß dem Steuerprogramm gesteuert wird; und
- dynamische Umverteilung der Steuerprogrammbausteine nach einer Programmänderung des Steuerprogramms oder einem Ausfall einer der Steuereinheiten (110, 120, 130, 140) des Automatisierungssystems (100).

10. Verfahren gemäß Anspruch 9,
**dadurch gekennzeichnet, dass** die übergeordnete Steuereinheit (110, 120, 130, 140, 150) bei einer Änderung des Automatisierungssystems (100) die Zuordnung der Steuerprogrammbausteine zu den mindestens zwei Steuereinheiten (110, 120, 130, 140) überprüft wird.

11. Verfahren gemäß Anspruch 10,
**dadurch gekennzeichnet, dass** die Zuordnung der Steuerprogrammbausteine zu den mindestens zwei Steuereinheiten (110, 120, 130, 140) durch die übergeordnete Steuereinheit (110, 120, 130, 140, 150) geändert wird, wenn die Überprüfung eine Nicht-Funktionalität oder eine verschlechterte Funktionalität der Steuerung des Geräts (165) oder der Anlage (160, 165) gemäß dem Steuerprogramm durch die Änderung des Automatisierungssystems (100) ergibt.

12. Übergeordnete Steuereinheit (110, 120, 130, 140, 150) für ein Automatisierungssystem (100), wobei das Automatisierungssystem (100) umfasst:
- mindestens eine erste und eine zweite Steuereinheit (110, 120, 130, 140) zur Steuerung eines Geräts (165) oder einer Anlage (160, 165) sowie eine erste und eine zweite Ein- und/oder Ausgabe-Einheit (110, 120, 130, 140, 145) zum Empfang eines elektronischen Signals von dem Gerät (165) bzw. der Anlage (160, 165) und/oder zur Ausgabe eines elektronischen Signals an das Gerät (165) bzw. die Anlage (160, 165), und
- ein Steuerprogramm, umfassenden mehrere Steuerprogrammbausteine, zur Steuerung des Geräts (165) oder der Anlage (160, 165),
- wobei das Automatisierungssystem (100) derart ausgebildet und eingerichtet ist, dass jede der mindestens zwei Steuereinheiten (110, 120, 130, 140) sowohl mit der ersten als auch mit der zweiten Ein- und/oder Ausgabeeinheit (110, 120, 130, 140, 145) elektronische Daten zur Steuerung des Geräts (165) oder der Anlage (160, 165) austauschen kann,
- wobei die übergeordnete Steuereinheit (110, 120, 130, 140, 150) zur Zuordnung der Steuerprogrammbausteine zu den mindestens zwei Steuereinheiten (110, 120, 130, 140) derart ausgebildet und eingerichtet ist, dass beim Ablauf der Steuerprogrammbausteine innerhalb der jeweiligen Steuereinheiten (110, 120, 130, 140) das Gerät (165) oder die Anlage (160, 165) entsprechend dem Steuerprogramm gesteuert wird, und
- wobei die übergeordnete Steuereinheit (110, 120, 130, 140, 150) zur dynamischen Umverteilung der Steuerprogrammbausteine nach einer Programmänderung des Steuerprogramms oder einem Ausfall einer der Steuereinheiten (110, 120, 130, 140) des Automatisierungssystems (100) ausgebildet und eingerichtet ist.

13. Übergeordnete Steuereinheit gemäß Anspruch 12,
**dadurch gekennzeichnet,**
**dass** die übergeordnete Steuereinheit (110, 120, 130, 140, 150) weiterhin gemäß einem der Ansprüche 2 bis 8 ausgebildet und eingerichtet ist.

## Claims

1. Automation system (100) comprising:
- at least a first and a second control unit (110, 120, 130, 140) for controlling a device (165) or an installation (160, 165) and also a first and a second input and/or output unit (110, 120, 130, 140, 145) for receiving an electronic signal from the device (165) or the installation (160, 165) and/or for outputting an electronic signal to the device (165) or the installation (160, 165), and
- a control program, comprising multiple control program components, for controlling the device (165) or the installation (160, 165),
- wherein the automation system (100) is designed and set up such that each of the at least two control units (110, 120, 130, 140) can interchange electronic data for controlling the device (165) or the installation (160, 165) both with the first and with the second input and/or output unit (110, 120, 130, 140, 145),
- wherein the automation system (100) additionally comprises a superordinate control unit (110, 120, 130, 140, 150) that assigns the control program components to the at least two control units (110, 120, 130, 140) such that when the control program components are executed within the respective control units (110, 120, 130, 140) the device (165) or the installation (160, 165) is controlled in accordance with the control program, and
- wherein the superordinate control unit (110, 120, 130, 140, 150) is designed and set up to dynamically redistribute the control program components after a program change in the control program or failure of one of the control units (110, 120, 130, 140) of the automation system (100).

2. Automation system according to Claim 1,
**characterized**
**in that** the input and/or output units (110, 120, 130, 140, 145) each have an associated communication module for communication with the first and/or second control unit (110, 120, 130, 140).

3. Automation system according to Claim 1 or 2,
**characterized**
**in that** the superordinate control unit (110, 120, 130, 140, 150) is designed and set up such that the assignment of the control program components to the at least two control units (110, 120, 130, 140) is checked in the event of a change in the automation system (100).

4. Automation system according to Claim 3,
**characterized**
**in that** the superordinate control unit (110, 120, 130, 140, 150) is designed and set up such that the assignment of the control program components to the at least two control units (110, 120, 130, 140) is changed following the check in the event of a change in the automation system (100),
in particular is changed if the result of the check is that control of the device (165) or of the installation (160, 165) is impaired or becomes impossible with the existing assignment of the control program components as a result of the change in the automation system (100).

5. Automation system according to one of the preceding claims,
**characterized**
**in that** the first and second input and/or output units (110, 120, 130, 140, 145) are each appended to the first and/or second control unit (110, 120, 130, 140), and the first and second input and/or output units (110, 120, 130, 140, 145) are or may be visible to and/or activable or actuable by each of the first and second control units (110, 120, 130, 140).

6. Automation system according to Claim 5,
**characterized**
**in that** the first and second input and/or output units (110, 120, 130, 140, 145) are each connected to the control unit (110, 120, 130, 140) to which they are appended via a backplane bus, wherein the backplane bus is configured and set up such that each of the input and/or output units (110, 120, 130, 140, 145) is addressable and/or activable from each of the control units (110, 120, 130, 140).

7. Automation system according to Claim 6,
**characterized**
**in that** a communication via the respective backplane buses is designed and set up as TCP/IP communication and/or on the basis of the Internet protocol, particularly on the basis of IPv4 or IPv6.

8. Automation system according to one of the preceding claims,
**characterized**
**in that** the first and second input and/or output units (110, 120, 130, 140, 145) and the first and/or second control unit (110, 120, 130, 140) are each designed and set up as modules or module combinations of a modular programmable logic controller.

9. Method for operating an automation system (100) according to one of the preceding claims,
comprising the steps of:
- assignment of the control program components to the at least two control units (110, 120, 130, 140) (110, 120, 130, 140) by the superordinate control unit (110, 120, 130, 140, 150);
- execution of the control program components within the first and/or second control unit (110, 120, 130, 140) such that the device (165) to be controlled by the automation system (100) or the installation (160, 165) to be controlled is controlled using the control program; and
- dynamic redistribution of the control program components after a program change in the control program or failure of one of the control units (110, 120, 130, 140) of the automation system (100).

10. Method according to Claim 9,
**characterized in that** the superordinate control unit (110, 120, 130, 140, 150) checks the assignment of the control program components to the at least two control units (110, 120, 130, 140) in the event of a change in the automation system (100).

11. Method according to Claim 10,
**characterized in that** the assignment of the control program components to the at least two control units (110, 120, 130, 140) is changed by the superordinate control unit (110, 120, 130, 140, 150) if the result of the check is a nonfunctionality or an impaired functionality of the control of the device (165) or of the installation (160, 165) using the control program as a result of the change in the automation system (100).

12. Superordinate control unit (110, 120, 130, 140, 150) for an automation system (100), wherein the automation system (100) comprises:
- at least a first and a second control unit (110, 120, 130, 140) for controlling a device (165) or an installation (160, 165) and also a first and a second input and/or output unit (110, 120, 130, 140, 145) for receiving an electronic signal from the device (165) or the installation (160, 165) and/or for outputting an electronic signal to the device (165) or the installation (160, 165), and
- a control program, comprising multiple control program components, for controlling the device (165) or the installation (160, 165),
- wherein the automation system (100) is designed and set up such that each of the at least two control units (110, 120, 130, 140) can interchange electronic data for controlling the device (165) or the installation (160, 165) both with the first and with the second input and/or output unit (110, 120, 130, 140, 145),
- wherein the superordinate control unit (110, 120, 130, 140, 150) is designed and set up to assign the control program components to the at least two control units (110, 120, 130, 140) such that when the control program components are executed within the respective control units (110, 120, 130, 140) the device (165) or the installation (160, 165) is controlled in accordance with the control program, and
- wherein the superordinate control unit (110, 120, 130, 140, 150) is designed and set up to dynamically redistribute the control program components after a program change in the control program or failure of one of the control units (110, 120, 130, 140) of the automation system (100).

13. Superordinate control unit according to Claim 12, **characterized**
**in that** the superordinate control unit (110, 120, 130, 140, 150) is furthermore designed and set up according to one of Claims 2 to 8.

## Revendications

1. Système d'automatisation (100) comprenant :
- au moins une première et une seconde unité de commande (110, 120, 130, 140) pour commander un appareil (165) ou une installation (160, 165), ainsi qu'une première et une seconde unité d'entrée et/ou de sortie (110, 120, 130, 140, 145) pour recevoir un signal électronique de l'appareil (165), respectivement de l'installation (160, 165) et/ou pour émettre un signal électronique à l'appareil (165), respectivement à l'installation (160, 165), et
- un programme de commande, comprenant plusieurs modules de programme de commande, pour commander l'appareil (165) ou l'installation (160, 165),
- dans lequel le système d'automatisation (100) est réalisé et configuré de telle sorte que chacune des au moins deux unités de commande (110, 120, 130, 140) peut échanger aussi bien avec la première qu'avec la seconde unité d'entrée et/ou de sortie (110, 120, 130, 140, 145) des données électroniques de commande de l'appareil (165) ou de l'installation (160, 165),
- dans lequel le système d'automatisation (100) comprend en outre une unité de commande maître (110, 120, 130, 140, 150) qui associe les modules de programme de commande aux au moins deux unités de commande (110, 120, 130, 140) de telle sorte que, lors de l'exécution des modules de programme de commande dans les différentes unités de commande (110, 120, 130, 140), l'appareil (165) ou l'installation (160, 165) est commandé(e) conformément au programme de commande, et
- dans lequel l'unité de commande maître (110, 120, 130, 140, 150) est réalisée et configurée pour la redistribution dynamique des modules de programme de commande après une modification de programme du programme de commande ou une défaillance de l'une des unités de commande (110, 120, 130, 140) du système d'automatisation (100).

2. Système d'automatisation selon la revendication 1,
**caractérisé en ce que**
un module de communication respectif est associé aux unités d'entrée et/ou de sortie (110, 120, 130, 140, 145) pour une communication avec la première et/ou la seconde unité de commande (110, 120, 130, 140).

3. Système d'automatisation selon la revendication 1 ou 2,
**caractérisé en ce que**
l'unité de commande maître (110, 120, 130, 140, 150) est réalisée et configurée de telle sorte que l'association des modules de programme de commande aux au moins deux unités de commande (110, 120, 130, 140) est vérifiée lors d'une modification du système d'automatisation (100).

4. Système d'automatisation selon la revendication 3,
**caractérisé en ce que**
l'unité de commande maître (110, 120, 130, 140, 150) est réalisée et configurée de telle sorte que l'association des modules de programme de commande aux au moins deux unités de commande (110, 120, 130, 140) est modifiée lors d'une modification du système d'automatisation (100) après la vérification,
en particulier est modifiée lorsque la vérification révèle que la commande de l'appareil (165) ou de l'installation (160, 165) est détériorée ou rendue impossible par la modification du système d'automatisation (100) par l'association existante des modules de programme de commande.

5. Système d'automatisation selon l'une quelconque des revendications précédentes,
**caractérisé en ce que**
les première et seconde unités d'entrée et/ou de sortie (110, 120, 130, 140, 145) sont respectivement rattachées à la première et/ou à la seconde unité de commande (110, 120, 130, 140) et les première et seconde unités d'entrée et/ou de sortie (110, 120, 130, 140, 145) sont visibles pour chacune des première et seconde unités de commande (110, 120, 130, 140) et/ou peuvent être rendues disponibles ou commandées par celles-ci.

6. Système d'automatisation selon la revendication 5,
**caractérisé en ce que**
les première et seconde unités d'entrée et/ou de sortie (110, 120, 130, 140, 145) sont reliées respectivement à l'unité de commande (110, 120, 130, 140) à laquelle elles sont rattachées, par l'intermédiaire d'un bus de fond de panier, le bus de fond de panier étant réalisé et configuré de telle sorte que chacune des unités d'entrée et/ou de sortie (110, 120, 130, 140, 145) peut être adressée et/ou commandée à partir de chacune des unités de commande (110, 120, 130, 140).

7. Système d'automatisation selon la revendication 6,
**caractérisé en ce que**
une communication par l'intermédiaire des bus de fond de panier respectifs est réalisée et configurée sous la forme d'une communication TCP/IP et/ou selon le protocole Internet, en particulier selon IPv4 ou IPv6.

8. Système d'automatisation selon l'une quelconque des revendications précédentes,
**caractérisé en ce que**
les première et seconde unités d'entrée et/ou de sortie (110, 120, 130, 140, 145) et la première et/ou la seconde unité de commande (110, 120, 130, 140) sont réalisées et configurées respectivement sous forme de modules ou de combinaisons de modules d'une commande modulaire programmable par mémoire.

9. Procédé pour faire fonctionner un système d'automatisation (100) selon l'une quelconque des revendications précédentes, comprenant les étapes consistant à :
- associer les modules de programme de commande aux au moins deux unités de commande (110, 120, 130, 140) (110, 120, 130, 140) par l'intermédiaire de l'unité de commande maître (110, 120, 130, 140, 150) ;
- exécuter les modules de programme de commande à l'intérieur de la première et/ou de la seconde unité de commande (110, 120, 130, 140) de telle sorte que l'appareil (165) ou l'installation (160, 165) à commander par l'intermédiaire du système d'automatisation (100) soit commandé(e) conformément au programme de commande ; et
- redistribuer de manière dynamique les modules de programme de commande après une modification de programme du programme de commande ou une défaillance de l'une des unités de commande (110, 120, 130, 140) du système d'automatisation (100).

10. Procédé selon la revendication 9,
**caractérisé en ce que** l'unité de commande maître (110, 120, 130, 140, 150), lors d'une modification du système d'automatisation (100), vérifie l'association des modules de programme de commande aux au moins deux unités de commande (110, 120, 130, 140) .

11. Procédé selon la revendication 10,
**caractérisé en ce que** l'association des modules de programme de commande aux au moins deux unités de commande (110, 120, 130, 140) est modifiée par l'unité de commande maître (110, 120, 130, 140, 150) lorsque la vérification aboutit à une non-fonctionnalité ou à une fonctionnalité détériorée de la commande de l'appareil (165) ou de l'installation (160, 165) conformément au programme de commande par la modification du système d'automatisation (100).

12. Unité de commande maître (110, 120, 130, 140, 150) pour un système d'automatisation (100), le système d'automatisation (100) comprenant :
- au moins une première et une seconde unité de commande (110, 120, 130, 140) pour commander un appareil (165) ou une installation (160, 165), ainsi qu'une première et une seconde unité d'entrée et/ou de sortie (110, 120, 130, 140, 145) pour recevoir un signal électronique de l'appareil (165), respectivement de l'installation (160, 165) et/ou pour émettre un signal électronique à l'appareil (165), respectivement à l'installation (160, 165), et
- un programme de commande, comprenant plusieurs modules de programme de commande, pour commander l'appareil (165) ou l'installation (160, 165),
- dans lequel le système d'automatisation (100) est réalisé et configuré de telle sorte que chacune des au moins deux unités de commande (110, 120, 130, 140) peut échanger aussi bien avec la première qu'avec la seconde unité d'entrée et/ou de sortie (110, 120, 130, 140, 145) des données électroniques de commande de l'appareil (165) ou de l'installation (160, 165),
- dans lequel l'unité de commande maître (110, 120, 130, 140, 150) pour l'association des modules de programme de commande aux au moins deux unités de commande (110, 120, 130, 140) est réalisée et configurée de telle sorte que, lors de l'exécution des modules de programme de commande dans les différentes unités de commande (110, 120, 130, 140), l'appareil (165) ou l'installation (160, 165) est commandé(e) en fonction du programme de commande, et
- dans laquelle l'unité de commande maître (110, 120, 130, 140, 150) est réalisée et configurée pour la redistribution dynamique des modules de programme de commande après une modification de programme du programme de commande ou une défaillance de l'une des unités de commande (110, 120, 130, 140) du système d'automatisation (100).

13. Unité de commande maître selon la revendication 12,
**caractérisé en ce que**
l'unité de commande maître (110, 120, 130, 140, 150) est en outre réalisée et configurée selon l'une quelconque des revendications 2 à 8.
